# EUROPÄISCHE PATENTSCHRIFT

(11) **EP 1 452 836 B1**
(45) Veröffentlichungstag und Bekanntmachung des Hinweises auf die Patenterteilung: **29.07.2009**
(21) Anmeldenummer: 04003455.5
(22) Anmeldetag: 17.02.2004
(51) Int. Cl.: G01D 5/347

(54) **Vorrichtung zum Messen des Drehwinkels**
Angular displacement sensing apparatus
Appareil pour détecter le déplacement angulaire

(30) Priorität: 27.02.2003 DE 10308440
(43) Veröffentlichungstag der Anmeldung: 01.09.2004
(73) Patentinhaber: SICK STEGMANN GmbH, 78166 Donaueschingen (DE)
(72) Erfinder: Siraky, Josef, 78166 Donaueschingen (DE)
(74) Vertreter: Patentanwälte Westphal, Mussgnug & Partner

(56) Entgegenhaltungen:
- EP-A- 1 045 227
- DE-A- 3 035 012
- DE-A- 4 402 401
- DE-A- 19 748 292
- DE-A- 19 750 474

## Beschreibung

Die Erfindung betrifft eine Vorrichtung zum Messen des Drehwinkels zweier gegeneinander verdrehbarer Bauteile gemäß dem Oberbegriff des Anspruchs 1.

Zur Messung des Drehwinkels zweier gegeneinander verdrehbarer Bauteile, z. B. der Welle eines Motors gegenüber dem Motorgehäuse, werden optische Drehgeber verwendet, bei welchen eine Maßverkörperung mit der Welle des Drehgebers rotiert. Die Maßverkörperung wird von einer Lichtquelle durchstrahlt, wobei eine lichtempfindliche Abtasteinrichtung das durch die Maßverkörperung modulierte Licht der Lichtquelle empfängt.

Aus der DE 197 50 474 A1 und aus der DE 100 63 899 A1 ist es bekannt, bei einem solchen Drehgeber die Lichtquelle axialzentrisch in der Welle des Drehgebers anzuordnen und die gesamte zu der Achse der Welle konzentrische Maßverkörperung auszuleuchten. Die Lichtquelle wird induktiv über eine feststehende Spule und eine in der Welle sitzende und sich mit dieser drehende Spule gespeist. Dadurch ergibt sich ein besonders kompakter Aufbau des Drehgebers mit insbesondere geringen radialen Abmessungen. Bei diesem bekannten Drehgeber weist die Maßverkörperung eine äußere inkrementale Spur auf, die durch eine kreisringförmige Spur von optischen Sensorelementen der Abtasteinrichtung abgetastet wird, um inkrementale Sinus- und Cosinus-Signale zu erzeugen. Weiter weist die Maßverkörperung digital codierte Spuren auf, die in der Abtasteinrichtung abgetastet werden, um die absolute Winkelstellung der Maßverkörperung und damit der Welle in einem digital codierten Datenwort zu erhalten.

Die digital codierte Abtastung der Absolut-Winkelstellung macht eine hohe Präzision in der gegenseitigen Zentrierung von Maßverkörperung und Abtasteinrichtung notwendig. Die hohe Zentrierungsgenauigkeit kann nur bei eigengelagerten Drehgebern zuverlässig eingehalten werden, bei welchen die Abtasteinrichtung und die Welle mit der Maßverkörperung gegenseitig mittels Präzisionslagerungen gelagert sind. Dies bedingt zum einen einen konstruktiven Aufwand für den Drehgeber und macht zum anderen eine Montage des Drehgebers an den zu messenden Bauteilen notwendig, die größere Lagertoleranzen dieser Bauteile aufnimmt.

Aus der DE 30 35 012 A ist ein Drehgeber bekannt mit einer mit einem ersten Bauteil kuppelbaren eine Maßverkörperung tragenden Welle und einer mit einem zweiten Bauteil kuppelbaren Abtasteinrichtung. Die Maßverkörperung weist eine Winkelgitterstruktur und die Abtasteinrichtung kreisringförmig angeordnete optische Sensoren auf, die einzeln elektrisch abgefragt werden können. Ein drehfest mit der Welle verbundenes Markerelement beeinflusst jeweils entsprechend seiner Winkelstellung das auf die dieser Winkelstellung zugeordneten Sensoren auftreffende Licht.

Der Erfindung liegt die Aufgabe zugrunde, eine Vorrichtung zum Messen des Drehwinkels zweier gegeneinander verdrehbarer Bauteile zu schaffen, welche geringere Anforderungen an die Zentrizität von Maßverkörperung und Abtastung zulässt und eine einfache Montage zulässt.

Diese Aufgabe wird erfindungsgemäß gelöst durch eine Vorrichtung mit den Merkmalen des Anspruchs 1.

Vorteilhafte Ausführungen der Erfindung sind in den Unteransprüchen angegeben.

Erfindungsgemäß weist die Vorrichtung zum Messen des Drehwinkels eine Maßverkörperung auf, die optisch vollständig ausgeleuchtet wird durch eine zentrische Lichtquelle in Durchlicht. Die Maßverkörperung mit einer Winkelgitterstruktur wird durch eine koaxial angeordnete kreisringförmige Spur von optischen Sensorelementen abgetastet. Diese Abtastung ergibt eine inkrementale Winkelmessung. Vorzugsweise haben die inkrementalen Winkel-Messsignale in an sich bekannter Weise die Form von Sinus- und Cosinus-Signalen, sodass durch Interpolation der Signalspannungen eine höhere Winkelauflösung der inkrementalen Winkelmessung möglich ist.

Erfindungsgemäß wird die absolute Winkelposition nicht durch digital codierte zusätzliche Spuren der Maßverkörperung und eine zusätzliche Abtastung gemessen. Es werden vielmehr die optischen Sensorelemente der kreisringförmigen Spur, welche für die inkrementale Winkelmessung verwendet wird, gleichzeitig auch für die absolute Winkelmessung ausgenutzt, indem ein sich mit der Welle drehendes Markerelement das auf die Sensorelemente auftreffende Licht moduliert. Die Sensorelemente der kreisringförmigen Spur der Abtasteinrichtung können einzeln abgefragt werden, sodass die jeweilige Lage des Markerelements und damit die jeweilige Winkelstellung der Welle über die Abfrage der Sensorelemente ermittelt werden kann. In einer vorteilhaften Ausführung der Erfindung ist das Markerelement als Unregelmäßigkeit der ansonsten regelmäßigen Winkelgitterstruktur ausgebildet. Dadurch kann die Winkelgitterstruktur der Maßverkörperung für die inkrementale Winkelmessung und das Markerelement für die absolute Winkelmessung auf einer gemeinsamen Scheibe in derselben optischen Struktur realisiert werden.

Die Bestimmung der Absolut-Winkelposition durch Abfrage der kreisringförmig angeordneten Sensorelemente ergibt eine eindeutige Absolut-Winkelmessung, die große Toleranzen in Bezug auf die Zentrizität und axiale Justage von Abtastung und Welle mit Maßverkörperung zulässt. Die Toleranzen der Zentrizität sind nur dadurch beschränkt, dass das Markerelement noch eindeutig einem Sensorelement der Abtastung zugeordnet werden kann. Aufgrund der zulässigen großen Toleranzen in Bezug auf die Zentrizität und die axiale Justage ist die erfindungsgemäße Vorrichtung nicht mehr auf eine Eigenlagerung von Abtastung und Maßverkörperung angewiesen. Die Welle mit der Maßverkörperung kann an einem Bauteil und die Abtastung an dem anderen Bauteil fest montiert werden. Die üblichen Lagertoleranzen der beiden gegeneinander verdrehbaren Bauteile, z. B. der Welle eines Elektromotors gegenüber dem Motorgehäuse, können von dem erfindungsgemäßen Drehgeber aufgenommen werden, ohne zu Fehlmessungen zu führen. Da keine Eigenlagerung notwendig ist, kann der Drehgeber erfindungsgemäß einerseits einfacher und damit kostengünstiger und andererseits kompakter und damit vielseitiger einsetzbar konstruiert werden.

Da erfindungsgemäß keine Eigenlagerung des Drehgebers erforderlich ist, können die Welle mit der Maßverkörperung und die Abtasteinrichtung unabhängig voneinander an den zwei in ihrer Winkelstellung zu vermessenden Bauteilen montiert werden. Dabei werden die radialen Lagertoleranzen dieser Bauteile von dem Drehgeber toleriert. Um die Maßverkörperung und die Abtastung axial gegeneinander zu justieren, wird die Welle des Drehgebers als Wellenstummel ausgebildet, der in dem zugehörigen Bauteil axial justiert befestigt wird. Dies kann bspw. dadurch geschehen, dass die Welle axial in das zugehörige Bauteil eingeschraubt wird. Eine besonders einfache und genaue axiale Justage ergibt sich, wenn die Welle als Spreizwelle ausgebildet ist, die kraftschlüssig klemmend in das zugehörige Bauteil eingesetzt wird. In dieser Ausführung kann die Abtasteinrichtung in einer Kappe angeordnet sein, die an dem zugehörigen Bauteil montiert wird. Die Welle mit der Maßverkörperung wird mittels eines Werkzeugs kraftschlüssig eingepresst, welches in der Form der Kappe der Abtasteinrichtung entspricht. Dadurch wird die Welle mit der Maßverkörperung zwangsläufig in eine axiale Position gebracht, die in Bezug auf die anschließend montierte Abtasteinrichtung axial justiert ist.

Ist nur ein Markerelement vorgesehen, so können sich Fehlanzeigen in der Absolut-Winkelmessung ergeben, wenn eine starke Exzentrizität in einer um 90° gegen das Markerelement versetzten Richtung vorliegt. Um solche Fehlanzeigen auszuschließen, ist vorzugsweise ein zweites Markerelement vorgesehen, welches im Winkel gegen das erste Markerelement versetzt ist. Bei zentrischer Anordnung von Welle und Abtasteinrichtung innerhalb der zulässigen Toleranzen ergibt sich in den Sensorelementen der Abtasteinrichtung derselbe Winkelabstand, den die Markerelemente aufweisen. Bei einer die zulässigen Toleranzen überschreitenden Exzentrizität zeigen die Sensorelemente der Abtasteinrichtung einen von dem Winkelabstand der Markerelemente abweichenden Winkelabstand an, woraus sich die Exzentrizität erkennen lässt. Die günstigste Anordnung der Markerelemente ist ein Winkel, der etwas geringer als 180° ist. Ein Winkel möglichst nahe an 180° ergibt die deutlichste Anzeige einer Exzentrizität, wobei durch die Abweichung von 180° auch die Richtung der Exzentrizität erkennbar ist.

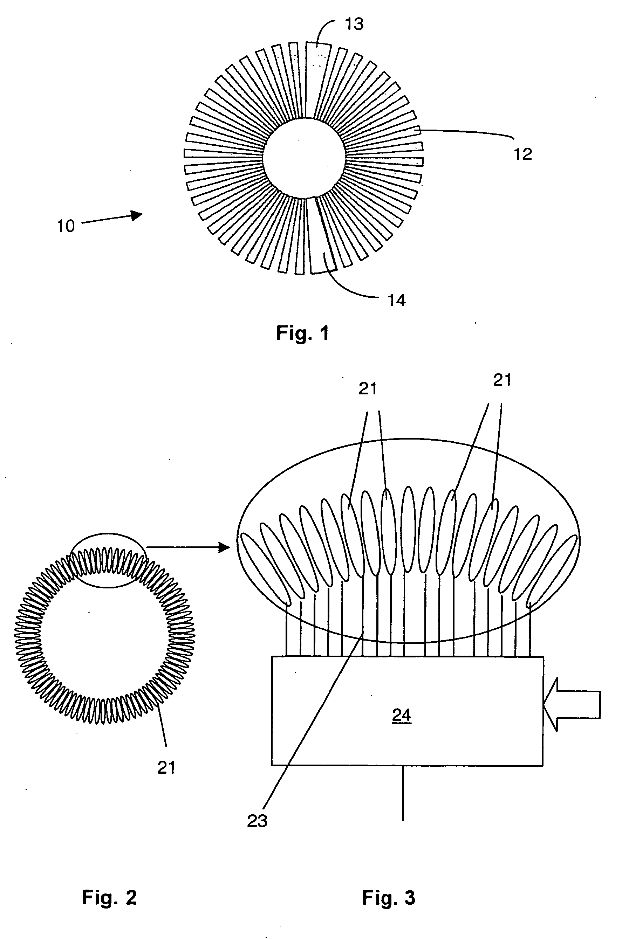

Im Folgenden wird die Erfindung anhand eines in der Zeichnung dargestellten Ausführungsbeispieles näher erläutert. Es zeigen
- Fig. 1: eine Maßverkörperung der Vorrichtung zum Messen des Drehwinkels,
- Fig. 2: die Abtasteinrichtung der Vorrichtung,
- Fig. 3: einen vergrößerten Ausschnitt aus der Abtasteinrichtung und
- Fig. 4-6: eine Ausführung der Vorrichtung im Axialschnitt und deren Montage.

Um die Drehwinkelstellung zweier gegeneinander verdrehbarer Bauteile zu bestimmen, z. B. die Drehwinkelstellung einer Motorwelle, wird ein optischer Drehgeber verwendet. Mit dem einen Bauteil, z. B. der Motorwelle, wird eine Maßverkörperung drehfest gekuppelt, die von einer Lichtquelle durchstrahlt wird. Das durch die Maßverkörperung in der Intensität modulierte Licht der Lichtquelle wird durch eine Abtasteinrichtung empfangen und in Winkelpositionssignale umgewandelt.

In dem dargestellten Ausführungsbeispiel besteht die Maßverkörperung 10 aus einer lichtdurchlässigen kreisförmigen Scheibe 11, auf welcher zentrisch zum Mittelpunkt eine Winkelgitterstruktur 12 aufgebracht ist. Die Winkelgitterstruktur 12 besteht aus radial verlaufenden Sektoren mit gleichem gegenseitigen Winkelabstand und gleicher Winkelbreite, wobei sich lichtdurchlässige und lichtundurchlässige Sektoren in Umfangsrichtung abwechseln. Weiter sind auf der Scheibe 11 Markerelemente 13 und 14 angebracht. Die Markerelemente 13 und 14 werden durch Unregelmäßigkeiten der Winkelgitterstruktur 12 gebildet. Im dargestellten Ausführungsbeispiel sind die Markerelemente 13 und 14 jeweils lichtundurchlässige Sektoren, die eine größere Winkelbreite aufweisen als die Sektoren der Winkelgitterstruktur 12. Die Markerelemente 13 und 14 sind um einen Winkel in Umfangsrichtung gegeneinander versetzt, der etwas weniger als 180° beträgt, z. B. zwischen 160° und 170° liegt.

Die Abtasteinrichtung 20 weist eine kreisringförmige Spur von im Winkel beabstandeten optischen Sensorelementen 21 auf. Der Außenradius der Spur der Sensorelemente 21 ist etwas kleiner als der Außenradius der Winkelgitterstruktur 12 der Maßverkörperung 10. Die Sensorelemente 21 sind vorzugsweise Fotodioden, die in einem Halbleiter-Chip 22 ausgebildet sind. Die Sensorelemente 21 weisen eine lichtempfindliche Fläche auf, die etwa die Form von radial ausgerichteten Ellipsen aufweist. Dadurch ergibt sich in an sich bekannter Weise ein Sinus-förmiger Verlauf der Fläche der Sensorelemente 21, die bei der Rotation der Scheibe 11 durch die Sektoren der Winkelgitterstruktur 21 abgedeckt wird. In jeweils um 90° versetzten Winkelbereichen der kreisringförmigen Spur werden Signale der Sensorelemente 21 abgenommen, um jeweils um 90° in der Phase gegeneinander versetzte inkrementale Winkelsignale zu erzeugen. Durch die Auswertung dieser Sinus-, Cosinus-, Minus-Sinus- und Minus-Cosinus-Signale können Exzentrizitätsfehler der Maßverkörperung 10 bzw. ihrer Winkelgitterstruktur 12 gegenüber der Abtasteinrichtung 20 bzw. der Spur ihrer Sensorelemente 21 rechnerisch kompensiert werden.

Jedes einzelne Sensorelement 21 ist über in dem Halbleiter-Chip 22 ausgebildete Leitungen 23 mit einer ebenfalls in dem Halbleiter-Chip 22 ausgebildeten Multiplex-Schaltung 24 verbunden. Über die Multiplex-Schaltung 24 kann jedes Sensorelement 21 einzeln abgefragt werden, um die Winkelposition der Markerelemente 12 und 13 bezüglich der Winkelteilung der Sensorelemente 21 zu ermitteln. Da die Markerelemente 13 und 14 in der Maßverkörperung 10 einen definierten Winkelabstand zueinander aufweisen, kann bei den durch die Markerelemente 13 und 14 erzeugten Abtastsignalen der Sensorelemente 21 überprüft werden, ob diese denselben Winkelabstand aufweisen wie die Markerelemente 13 und 14. Eine Abweichung des Winkelabstandes der Sensorelemente 21, in welchem die Signal der Markerelemente 13 und 14 erzeugt werden, von dem Winkelabstand der Markerelemente 13 und 14 in der Maßverkörperung 10 weist darauf hin, dass die Maßverkörperung 10 einen unzulässig großen Zentrierungsfehler gegenüber der Abtasteinrichtung 20 aufweist. Zentrierungsfehler, die kleiner sind als diese Toleranz, beeinträchtigen die Funktion des Drehgebers nicht und führen insbesondere nicht zu einem falschen Absolut-Winkelmesswert.

Während des Betriebs der Vorrichtung wird im Allgemeinen beim Start der Absolut-Winkelmesswert der Maßverkörperung 10 in Bezug auf die Abtasteinrichtung 20 mittels der Markerelemente 13 und 14 und der Sensorelemente 21 festgestellt. Dann wird über die Winkelgitterstruktur 12 und die Sensorelemente 21 die Winkelstellung inkremental von diesem Absolut-Winkelwert ausgehend gezählt.

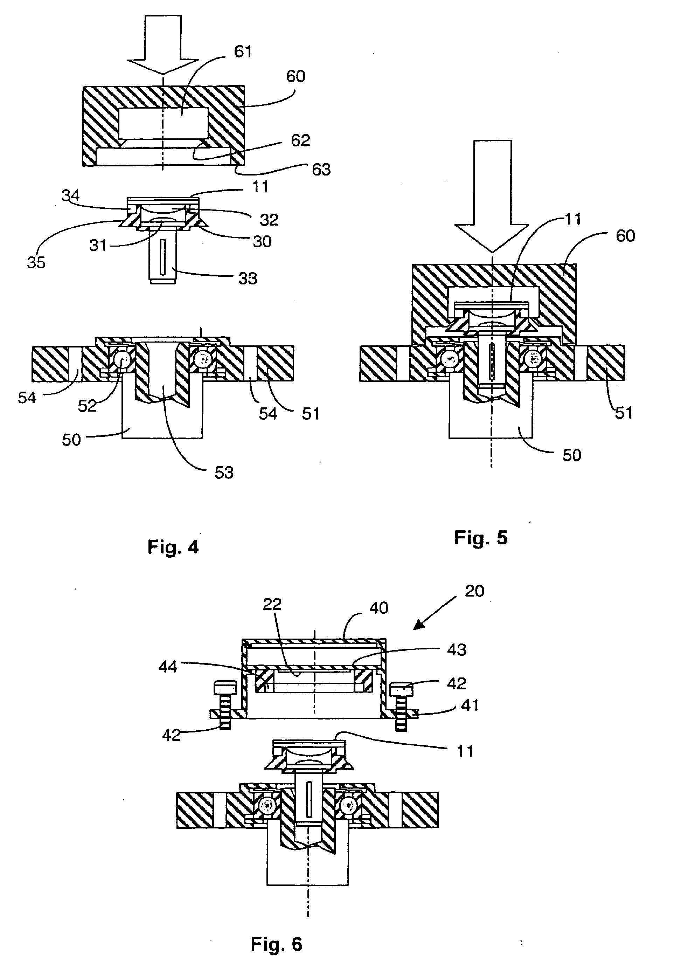

In den Fig. 4-6 ist eine konstruktive Ausführung der Vorrichtung als Beispiel dargestellt.

Bspw. soll für einen Servo-Antrieb die Ist-Drehwinkelstellung einer Motorwelle 50, z. B. eines Elektromotors, ermittelt werden. Hierzu muss die Winkelstellung der Motorwelle 50 in Bezug auf das Motorgehäuse 51 bestimmt werden. Die Motorwelle 50 ist dabei mittels eines Radiallagers 52 drehbar in dem Motorgehäuse 51 gelagert. Das Radiallager 52 weist Lagertoleranzen auf, woraus sich Zentrizitäts-Toleranzen der Motorwelle 50 gegenüber dem Motorgehäuse 51 ergeben.

In einer hohlzylindrischen Buchse 30 sitzt zentrisch eine Lichtquelle 31. Auf die vordere Stirnseite der Buchse 30 ist axial gegenüber der Lichtquelle 31 beabstandet die Scheibe 11 der Maßverkörperung 10 aufgesetzt. Der Innendurchmesser der Buchse 30 entspricht dabei dem Außendurchmesser der Winkelgitterstruktur 12. Die gesamte Winkelgitterstruktur 12 der Scheibe 11 wird durch die Lichtquelle 31 gleichmäßig mit paralleler Lichtführung durchstrahlt, wozu eine Kollimatorlinse 32 im Lichtweg zwischen der Lichtquelle 31 und der Scheibe 11 angeordnet ist. Die Kollimatorlinse 32 kann auch auf der Scheibe 11 ausgebildet sein. Die Buchse 30 wird von einem Wellenstummel 33 getragen, der koaxial an der der Scheibe 11 entgegengesetzten Stirnseite der Buchse 30 angeordnet ist. Der Wellenstummel 33 ist als Spreizwelle mit axial verlaufenden Federn ausgebildet. Der Wellenstummel 33 wird koaxial in eine Sackbohrung 53 der Motorwelle 50 eingesetzt und wird dadurch in der Motorwelle 50 kraftschlüssig klemmend sowohl axial als auch in Drehrichtung festgehalten.

Die Abtasteinrichtung 20 ist in einer in Fig. 6 gezeigten Kappe 40 angeordnet, die im montierten Zustand den Drehgeber gegen die Außenumgebung abdichtet und kapselt. Die Kappe 40 weist einen Flansch 41 auf, der an dem Motorgehäuse 51 zur Anlage kommt. Schrauben 42 durchsetzen den Flansch 41 und werden in Gewindebohrungen 54 des Motorgehäuses 51 eingeschraubt.

In der Kappe 40 ist eine Leiterplatte 43 angeordnet, die den Halbleiter-Chip 22 mit den Sensorelementen 21 auf ihrer der Maßverkörperung 10 zugewandten Seite trägt. Über die Leiterplatte 43 erfolgt die Versorgung des Halbleiter-Chips 22 sowie die Ansteuerung und Signalverarbeitung.

Damit die Lichtquelle 31 mit der Motorwelle 50 und der Maßverkörperung 10 rotieren kann, wird die Lichtquelle 31 berührungslos mit Energie gespeist. Hierzu dient eine induktive Stromzuführung über eine feststehende in der Kappe 40 angeordnete Spule 44 in eine in der Buchse 30 sitzende und mit dieser rotierende Spule 34.

Zur Montage des Drehgebers an dem Motor dient ein Werkzeug 60, welches in den Fig. 4 und 5 gezeigt ist. Das Werkzeug 60 hat die Form einer Kappe, welche im Wesentlichen der Kappe 40 entspricht. Das Werkzeug 60 weist einen zylindrischen Innenhohlraum 61 auf, in welchen die Buchse 30 eingesetzt wird. Der Innenhohlraum 61 weist an seiner offenen Stirnseite einen Innenkonus 62 auf, an welchem ein Außenkonus 35 der Buchse 30 zur Anlage kommt. Dadurch nimmt die Buchse 30 eine radial und insbesondere axial definierte Position in dem Werkzeug 60 ein.

Die Buchse 30 wird dann mit Hilfe des Werkzeugs 60 mit ihrem Wellenstummel 33 in die Sackbohrung 53 der Motorwelle 50 eingedrückt, wie dies in Fig. 4 und 5 dargestellt und durch einen Pfeil symbolisiert ist. Bei diesem Eindrücken dringt der Wellenstummel 33 axial so weit in die Sackbohrung 53 der Motorwelle 50 ein, bis das Werkzeug 60 mit einem Anschlagrand 63 an dem Motorgehäuse 51 zur Anlage kommt. Durch den kraftschlüssigen Sitz des Wellenstummels 33 in der Sackbohrung 53 hat somit die Buchse 30 und damit die Scheibe 11 der Maßverkörperung 10 eine exakte axial definierte Lage in Bezug auf das Motorgehäuse 51.

Nun wird das Werkzeug 60 abgenommen und die Kappe 40 mit der Abtasteinrichtung 20 aufgesetzt. Der Flansch 41 der Kappe 40 kommt dabei an derselben Stelle an dem Motorgehäuse 51 zur Anlage, an welchem der Anschlagrand 63 des Werkzeugs 60 zur Anlage kommt. Dadurch ist gewährleistet, dass die Abtasteinrichtung 20 mit den Sensorelementen 21 axial in Bezug auf dieselbe Fläche des Motorgehäuses 51 justiert wird, auf welche die Scheibe 11 der Maßverkörperung 10 mittels des Werkzeugs 60 axial justiert wurde. Es ergibt sich dadurch eine genaue axiale Justage der Maßverkörperung 10 in Bezug auf die Abtasteinrichtung 20.

Die Zentrierung der Maßverkörperung 10 in Bezug auf die Abtasteinrichtung 20 in radialer Richtung ist durch die radiale Lagerung der Motorwelle 50 in dem Motorgehäuse 51 gegeben, d. h. durch die Lagertoleranz des Radiallagers 52. Diese Zentrierungstoleranz wird durch die erfindungsgemäße Ausgestaltung des Drehgebers aufgenommen.

### Bezugszeichenliste

- 10: Maßverkörperung
- 11: Scheibe
- 12: Winkelgitterstruktur
- 13: Markerelement
- 14: Markerelement

- 20: Abtasteinrichtung
- 21: Sensorelemente
- 22: Halbleiter-Chip
- 23: Leitungen
- 24: Multiplex-Schaltung

- 30: Buchse
- 31: Lichtquelle
- 32: Kollimatorlinse
- 33: Wellenstummel
- 34: Spule
- 35: Außenkonus

- 40: Kappe
- 41: Flansch
- 42: Schrauben
- 43: Leiterplatte
- 44: Spule

- 50: Motorwelle
- 51: Motorgehäuse
- 52: Radiallager
- 53: Sackbohrung
- 54: Gewindebohrungen

- 60: Werkzeug
- 61: Innenhohlraum
- 62: Innenkonus
- 63: Anschlagrand

## Patentansprüche

1. Vorrichtung zum Messen des Drehwinkels zweier gegeneinander verdrehbarer Bauteile, mit einer mit dem ersten Bauteil (50) drehfest kuppelbaren Welle (30,33), mit einer drehfest und koaxial mit der Welle (30,33) verbundenen Maßverkörperung (10), die eine Winkelgitterstruktur (12) aufweist, mit einer koaxial in der Welle (30,33) angeordneten Lichtquelle (31), die die Maßverkörperung (10) durchstrahlt, mit einer mit dem zweiten Bauteil (51) drehfest kuppelbaren, die Maßverkörperung (10) optisch abtastenden Abtasteinrichtung (20), die eine zu der Welle (30,33) koaxial angeordnete kreisringförmige Spur von im Winkel beabstandeten optischen Sensorelementen (21) aufweist und auf der der Lichtquelle(31) entgegengesetzten Seite der Maßverkörperung (10) in einer an dem zweiten Bauteil (51) montierbaren Kappe (40) angeordnet ist, und mit einer feststehenden Spule (44) und einer in der Welle (30,33) sitzenden und mit dieser rotierenden Spule (34) zur induktiven Stromzuführung zu der Lichtquelle (31), **dadurch gekennzeichnet, dass** ein drehfest mit der Welle (30, 33) verbundenes Markerelement (13) das auf die Sensorelemente (21) auftreffende Licht entsprechend seiner Winkelstellung für jeweils wenigstens ein dieser Winkelstellung zugeordnetes Sensorelement (21) beeinflusst, dass die Sensorelemente (21) einzeln elektronisch abgefragt werden können, dass die Welle mit einem Wellenstummel (33) koaxial und axial justierbar in das erste Bauteil (50) einsetzbar ist und dass die feststehende Spule (44) in der die Abtasteinrichtung (20) aufnehmenden Kappe (40) angeordnet ist.

2. Vorrichtung nach Anspruch 1,
**dadurch gekennzeichnet, dass** der Wellenstummel (33) als Spreizwelle ausgebildet und kraftschlüssig klemmend in eine Sackbohrung (53) des ersten Bauteils (50) einsetzbar ist.

3. Vorrichtung nach Anspruch 1 oder 2,
**dadurch gekennzeichnet, dass** die Welle (30,33) mit der Maßverkörperung (10) mittels eines der Kappe (40) entsprechenden Werkzeugs (60) in das erste Bauteil (50) eingepresst und axial justiert wird.

4. Vorrichtung nach Anspruch 1,
**dadurch gekennzeichnet, dass** das Markerelement (13) und die Maßverkörperung (10) auf einer gemeinsamen Scheibe (11) ausgebildet sind.

5. Vorrichtung nach Anspruch 4,
**dadurch gekennzeichnet, dass** die Maßverkörperung (10) eine Winkelgitterstruktur (12) mit äquidistanter Winkelteilung aufweist und das Markerelement (13) durch eine Unregelmäßigkeit dieser Winkelteilung gebildet ist.

6. Vorrichtung nach einem der Ansprüche 1, 4 oder 5,
**dadurch gekennzeichnet, dass** wenigstens ein zweites Markerelement (14) vorgesehen ist, das im Winkel gegen das erste Markerelement (13) versetzt angeordnet ist.

7. Vorrichtung nach Anspruch 6,
**dadurch gekennzeichnet, dass** die Markerelemente (13, 14) unter einem vom 180° abweichenden Winkel gegeneinander versetzt sind, der vorzugsweise nahe bei 180° liegt.

8. Vorrichtung nach einem der vorhergehenden Ansprüche,
**dadurch gekennzeichnet, dass** die Maßverkörperung (10) in den optischen Sensorelementen (21) wenigstens ein inkremental gezähltes Sinus-Signal und ein um 90° gegen dieses phasenverschobenes Cosinus-Signal erzeugt.

9. Vorrichtung nach Anspruch 8,
**dadurch gekennzeichnet, dass** die durch die Maßverkörperung (10) in den optischen Sensorelementen (21) erzeugten Signale an jeweils um 90° gegeneinander versetzten Winkelpositionen der kreisringförmigen Spur abgetastet werden.

10. Vorrichtung nach einem der vorhergehenden Ansprüche,
**dadurch gekennzeichnet, dass** die Sensorelemente (21) über eine Multiplex-Schaltung (24) einzeln abgefragt werden.

11. Vorrichtung nach einem der vorhergehenden Ansprüche,
**dadurch gekennzeichnet, dass** das erste Bauteil die Motorwelle (50) eines Motors und das zweite Bauteil das Motorgehäuse (51) des Motors ist.

## Claims

1. Device for measurement of the rotation angle of two components that can be rotated relative to each other, with a shaft (30, 33) that can be coupled to rotate in unison with the first component (50), with a materialized measure (10) connected coaxially and rotating in unison with the shaft (30, 33), which has an angle lattice structure (12), with a light source (31) arranged coaxially in the shaft (30, 33), which illuminates the materialized measure (10), with a sensing device (20) that optically senses the materialized measure (10) connected to rotate in unison with the second component (51), which has a circular track of optical sensor elements (21) spaced apart at an angle and arranged coaxially to the shaft (30, 33) and is arranged on the side of the materialized measure (10) opposite the light source (31) in a cap (40) mountable on the second component (51), and with a stationary coil (44) and a coil (34) sitting in the shaft (30, 33) and rotating with this for inductively feeding current to the light source (31), **characterized in that** a marker element (13) connected to rotate in unison with the shaft (30, 33) influences the light impinging on the sensor elements (21) according to its angular position for at least one sensor element (21) associated with this angular position, that the sensor elements (21) can be electronically polled individually, that the shaft is insertable with a shaft stub (33) coaxially and axially alignable into the first component (50) and **in that** the stationary coil (44) is arranged in the cap (40) holding the sensing device (20).

2. Device according to claim 1, **characterized in that** the shaft stub (33) is designed as an expanding shaft and can be inserted with a force fit into a blind hole (53) of the first component (50).

3. Device according to claim 1 or 2, **characterized in that** the shaft (30, 33) with the materialized measure (10) is pressed into the first component (50) and is axially aligned by means of a tool (60) corresponding to this cap (40).

4. Device according to claim 1, **characterized in that** the marker element (13) and the materialized measure (10) are formed on a common disk (11).

5. Device according to claim 4, **characterized in that** the materialized measure (10) has an angle lattice structure (12) with equidistant angle division and the marker element (13) is formed by an irregularity of this angle division.

6. Device according to anyone of the claims 1, 4 or 5, **characterized in that** at least a second marker element (14) is provided, which is arranged offset at an angle relative to the first marker element (13).

7. Device according to claim 6, **characterized in that** the marker elements (13, 14) are offset relative to each other at an angle different from 180°, that preferably lies close to 180°.

8. Device according to anyone of the above claims, **characterized in that** the materialized measure (10) generates in the optical sensor elements (21) at least an incrementally counted sine signal and a cosine signal phase-shifted by 90° relative to it.

9. Device according to claim 8, **characterized in that** the signals generated by the materialized measure (10) in the optical sensor elements (21) are sensed at angular positions of the circular track which are offset relative to each other by 90°.

10. Device according to anyone of the above claims, **characterized in that** the sensor elements (21) are individually polled by a multiplex circuit (24).

11. Device according to anyone of the above claims, **characterized in that** the first component is the motor shaft (50) of a motor and the second component is the motor housing (51) of the motor.

## Revendications

1. Dispositif pour mesurer l'angle de rotation (déplacement angulaire) de deux pièces tournant l'une par rapport à l'autre comportant:
- un arbre (30, 33) couplé solidairement en rotation à la première pièce (50),
- un étalon de mesure (10) relié solidairement et coaxialement à l'arbre (30, 33), cet étalon de mesure ayant une structure de réseau angulaire (12),
- une source lumineuse (31) installée coaxialement dans l'arbre (30, 33) pour rayonner à travers l'étalon de mesure (10),
- une installation de détection (20) couplée solidairement en rotation à la seconde pièce (51), et qui détecte de manière optique l'étalon de mesure (10), cette installation de détection ayant une trace en forme d'anneau de cercle coaxial à l'arbre (30, 33) formé d'éléments de capteurs optiques (21) écartés angulairement, et installés sur le côté de l'étalon de mesure (10) à l'opposé de la source lumineuse (31) dans un capot (40) monté sur la seconde pièce (51), et
- une bobine fixe (44) et une bobine installée dans l'arbre (30, 33), avec laquelle la bobine rotative (34) coopère pour assurer l'alimentation électrique par induction de la source lumineuse (31),
**caractérisé en ce qu'**
un élément marqueur (13) est relié solidairement en rotation à l'arbre (30, 33), cet élément influençant la lumière tombant sur l'élément de capteur (21) en fonction de sa position angulaire, pour chaque fois au moins un élément de capteur (21) associé à cette position angulaire,
les éléments de capteur (21) peuvent être interrogés une à un de manière électronique,
l'arbre muni de l'élément d'arbre (33) se place coaxialement et de façon réglée axialement dans la première pièce (50), et
la bobine fixe (44) est prévue dans le capot (40) recevant l'installation de détection (20).

2. Dispositif selon la revendication 1,
**caractérisé en ce que**
l'élément d'arbre (33) est réalisé sous la forme d'un arbre extensible, et logé de façon a être serré par une liaison de force dans un perçage borgne (53) de la première pièce (50).

3. Dispositif selon la revendication 1 ou 2,
**caractérisé en ce que**
l'arbre (30, 33) avec l'étalon de mesure (10) est enfoncé de force à l'aide d'un outil (60) correspondant au capot (40) dans la première pièce (50) puis est ajusté axialement.

4. Dispositif selon la revendication 1,
**caractérisé en ce que**
l'élément marqueur (13) et l'étalon de mesure (10) sont réalisés sur un disque commun (11).

5. Dispositif selon la revendication 4,
**caractérisé en ce que**
l'étalon de mesure (10) comporte une structure de réseau angulaire (12) avec une répartition angulaire équidistante et l'élément marqueur (13) est constitué par une irrégularité de cette répartition angulaire.

6. Dispositif selon les revendications 1, 4 ou 5,
**caractérisé par**
au moins une second élément marqueur (14) installé avec un décalage angulaire par rapport au premier élément marqueur (13).

7. Dispositif selon la revendication 6,
**caractérisé en ce que**
les éléments marqueurs (13, 14) sont décalés l'un par rapport à l'autre d'un angle différent de 180° mais qui est de préférence voisin de 180°.

8. Dispositif selon les revendications précédentes,
**caractérisé en ce que**
l'étalon de mesure (10) génère dans les éléments de capteurs optiques (21) au moins un signal sinus compté de façon incrémentale et un signal cosinus, déphasé du précédent d'un angle de 90°.

9. Dispositif selon la revendication 8,
**caractérisé en ce que**
les signaux générés par l'étalon de mesure (10) dans les éléments de capteurs optiques (21) sont détectés respectivement dans des positions angulaires décalées chaque fois de 90° pour la trace en forme d'anneau de cercle.

10. Dispositif selon les revendications précédentes,
**caractérisé en ce que**
les éléments de capteurs (21) sont interrogés séparément par un circuit multiplex (24).

11. Dispositif selon les revendications précédentes,
**caractérisé en ce que**
la première pièce est l'arbre de sortie (50) d'un moteur et la seconde pièce est le boîtier (51) du moteur.
